# EUROPÄISCHE PATENTANMELDUNG

(11) **EP 2 679 838 A1**
(43) Veröffentlichungstag der Anmeldung: **01.01.2014**
(21) Anmeldenummer: 13173377.6
(22) Anmeldetag: 24.06.2013
(51) Int. Cl.: F16B 33/00

(54) **Hygieneverbindungseinrichtung**

(30) Priorität: 25.06.2012 DE 102012210700
(71) Anmelder: Weber Maschinenbau GmbH Breidenbach, 35236 Breidenbach (DE)
(72) Erfinder: Kuhmichel, Christoph, 57319 Bad Berleburg (DE); Krauss, Franziska, 35236 Breidenbach (DE); Yokaribas, Volkan, 35236 Breidenbach (DE); Biernath, Steffen, 17033 Neubrandenburg (DE)
(74) Vertreter: Manitz, Finsterwald & Partner GbR

(57) **Zusammenfassung**

Ein Verbindungselement für Maschinen zur Bearbeitung und/oder Verarbeitung von Lebensmittelprodukten, das mittels eines eine Mittelachse definierenden Befestigungsabschnitts an einem Bauteil der Maschine befestigbar ist und einen im befestigten Zustand mit einer Kontaktfläche des Bauteils zusammenwirkenden, den Befestigungsabschnitt umgebenden Auflageabschnitt aufweist, ist dadurch gekennzeichnet, dass der Auflageabschnitt eine Innenfläche zur Anlage an der Kontaktfläche des Bauteils und eine die Innenfläche umgebende Außenfläche zur Anlage an einer Dichtung umfasst, wobei die Außenfläche zur Aufnahme der Dichtung gegenüber der Innenfläche zurückgesetzt ist. Eine Dichtung für ein solches Verbindungselement ist ringförmig ausgebildet und weist eine Mittelachse auf, wobei die Dichtung eine Oberseite zur Anlage an der Außenfläche, eine Innenseite, eine Unterseite zur Anlage an der Kontaktfläche des Bauteils, und eine Außenseite umfasst, wobei der Durchmesser der Außenseite in axialer Richtung variiert und am Übergang in die Unterseite am größten ist.

## Beschreibung

Die Erfindung betrifft ein Verbindungselement für Maschinen zur Bearbeitung und/oder Verarbeitung von Lebensmittelprodukten, das mittels eines eine Mittelachse definierenden Befestigungsabschnitts an einem Bauteil der Maschine befestigbar ist und einen im befestigten Zustand mit einer Kontaktfläche des Bauteils zusammenwirkenden, den Befestigungsabschnitt umgebenden Auflageabschnitt aufweist.

Die Erfindung betrifft ferner eine Dichtung für ein solches Verbindungselement, eine Anordnung wenigstens eines solchen Verbindungselements und wenigstens einer derartigen Dichtung, die Verwendung eines solchen Verbindungselements und einer derartigen Dichtung oder einer solchen Anordnung sowie eine Baugruppe mit einer solchen Anordnung und wenigstens einem Bauteil, an dem die Anordnung befestigt ist.

Die Bearbeitung und/oder Verarbeitung von Lebensmittelprodukten in großem Maßstab erfolgt heutzutage in der Regel automatisiert. Anlagen zur Bearbeitung und/oder Verarbeitung von Lebensmittelprodukten umfassen daher eine Vielzahl von Maschinen, wie etwa Schneidevorrichtungen, Fördervorrichtungen, Einlegeeinrichtungen, Sortiervorrichtungen und Verpackungsvorrichtungen. Im Umgang mit Lebensmittelprodukten werden dabei hohe Anforderungen an die Hygiene gestellt. Das umfasst insbesondere, dass sich alle Elemente einer derartigen Anlage, d.h. Teile von Maschinen, ganze Maschinen oder Anordnungen von Maschinen, auf einfache und zuverlässige Weise regelmäßig und gründlich reinigen lassen. Typischerweise erfolgt eine entsprechende Reinigung mittels Wasser oder einer anderen Reinigungsflüssigkeit, die unter Hochdruck auf die zu reinigenden Elemente gespritzt wird. Hierbei ist es wichtig, dass die Reinigungsflüssigkeit einerseits alle Stellen erreicht, die verunreinigt sein können, andererseits aber nicht in kritische Bereiche eindringen kann, in denen die Reinigungsflüssigkeit unerwünscht ist oder, beispielsweise an der Mechanik oder Elektronik einer Maschine, Schaden anrichten würde. Ferner ist zu verhindern, dass die Reinigungsflüssigkeit selbst Verunreinigungen in kritische Bereiche spült.

Schwierigkeiten, die zu reinigenden Bereiche von den Bereichen, in die keine Reinigungsflüssigkeit eindringen soll, zuverlässig gegeneinander abzudichten, ergeben sich insbesondere dort, wo an einer Übergangsstelle zwischen einem zu reinigenden und einem nicht zu reinigenden Bereich Verbindungselemente etwa zur Verbindung verschiedener Bauteile von Maschinen vorgesehen sind. Solche Verbindungselemente sind beispielsweise Schrauben und/oder Mutterelemente, die typischerweise zumindest teilweise durch Öffnungen in den Bauteilen, die etwa eine Grenzfläche zwischen den genannten Bereichen darstellen, hindurchgeführt werden bzw. an solchen Öffnungen anliegen. Eine derartige Grenzfläche zwischen einem unter Hochdruck zu reinigenden Bereich und einem Bereich, in den keine Reinigungsflüssigkeit eindringen darf, stellen beispielsweise Edelstahlbleche dar, insbesondere zwei beabstandete Blechelemente mit einem Hohlraum dazwischen, die durch Anordnungen von Schrauben und Mutterelementen sowie gegebenenfalls Verlängerungs- und Distanzelementen untereinander oder mit weiteren Bauteilen verbunden werden. Derartige beabstandete Blechelemente liegen z.B. dann vor, wenn zwei Module miteinander zu verbinden sind, die mit einander zugewandten, jeweils von einem der Blechelemente gebildeten Seiten aneinander befestigt werden sollen, wobei zwischen den Seiten, also zwischen den Blechelementen, ein definierter Abstand vorhanden sein soll.

Zur dichten Anordnung solcher Verbindungselemente ist es bekannt, diese sehr fest, das heißt insbesondere mit hohem Druck zwischen den aneinander anliegenden Flächen, an dem jeweiligen Bauteil zu befestigen, um ein Eindringen von Reinigungsflüssigkeit und/oder Verunreinigungen zwischen das Verbindungselement und das Bauteil zu verhindern. Allerdings weisen übliche Verbindungselemente und Bauteile, insbesondere Edelstahlbleche, eine gewisse Rauhigkeit auf, aufgrund derer die Anlage des Verbindungselements an das Bauteil in der Regel nicht ausreichend dicht für höchste Hygienemaßstäbe ist. Zwar kann die Rauhigkeit der genannten Elemente durch Polieren verringert werden, jedoch nicht vollständig. Zudem ist gerade bei Verwendung einer Vielzahl von Verbindungselementen eine derartige hochpräzise Verarbeitung sehr aufwendig und mithin kostspielig.

Zur Verbesserung der Abdichtung ist es ferner bekannt, zwischen das Verbindungselement und ein jeweiliges Bauteil eine gesonderte Dichtung anzuordnen. Eine solche Dichtung kann das Abschließen einer Durchtrittsstelle zwischen einem zu reinigenden Bereich und einem Raum, in den keine Reinigungsflüssigkeit eindringen soll, verbessern. Bei herkömmliche Anordnungen von bekannten Dichtungen an bekannte Verbindungselemente ist es jedoch oftmals der Fall, dass dennoch, zumindest bis zu einer gewissen Tiefe, in Spalte zwischen der Dichtung und dem Verbindungselement und/oder zwischen der Dichtung und dem jeweiligen Bauteil Reinigungsflüssigkeit und/oder Verunreinigungen, beispielsweise Lebensmittelreste, eindringen können, wie mit Indikatoren leicht nachgewiesen werden kann. Derartige Verunreinigungen sind desto umfangreicher und dringen desto tiefer in die genannten Spalte ein, mit je höherem Druck die Reinigung vorgenommen wird. Daher werden in der Regel Maximaldrücke für die Reinigung vorgegeben, deren Einhaltung jedoch schwer durchzusetzen und zu überwachen ist. Es ist deshalb vorteilhaft, die Abdichtung so auszubilden, dass nominelle Anforderungen an diese deutlich übererfüllt werden, um höchsten Hygienemaßstäben zu entsprechen.

Es ist daher Aufgabe der Erfindung, Verbindungselemente, Dichtungen für diese Verbindungselemente, Anordnungen solcher Verbindungselemente und solcher Dichtungen bzw. Baugruppen mit solchen Verbindungselementen und Dichtungen zu schaffen, durch die zuverlässig zu reinigende Bereiche gegenüber Bereichen abgedichtet werden, in die keine unerwünschten Stoffe, wie Reinigungsflüssigkeiten und/oder Verunreinigungen, insbesondere Lebensmittelreste, eindringen sollen, und durch die ein Eindringen derartiger unerwünschter Stoffe zwischen das Verbindungselement und eine Dichtung und/oder zwischen eine Dichtung und ein Bauteil, an dem das Verbindungselement befestigt ist, zuverlässig verhindert wird.

Die Aufgabe wird gelöst durch ein Verbindungselement mit den Merkmalen des Anspruchs 1 und insbesondere dadurch, dass der Auflageabschnitt des Verbindungselements eine Innenfläche zur Anlage an der Kontaktfläche des Bauteils und eine die Innenfläche umgebende Außenfläche zur Anlage an einer Dichtung umfasst, wobei die Außenfläche zur Aufnahme der Dichtung gegenüber der Innenfläche zurückgesetzt ist.

Mit anderen Worten ist der Auflageabschnitt, mit dem das Verbindungselement an dem Bauteil anliegen kann, in mindestens zwei Flächen aufgeteilt, nämlich zum einen eine Innenfläche, welche bei Befestigung des Verbindungselements an dem Bauteil direkt an der Kontaktfläche des Bauteils anliegt und so einerseits bereits eine erste Abdichtung bewirkt und andererseits die Anordnung des Verbindungselements an dem Bauteil stabilisiert, und zum anderen eine Außenfläche, die gegenüber der Innenfläche zurückgesetzt ist und so Raum für eine Dichtung bietet, welche zuverlässig das Eindringen von Verunreinigungen zwischen die Dichtung und das Verbindungselement bzw. das Bauteil verhindern kann.

Das Vorsehen einer zurückgesetzten Außenfläche zur Anlage an einer Dichtung ist einerseits insofern vorteilhaft gegenüber einer direkten vollständigen Anlage des Auflageabschnitts des Verbindungselements an das jeweilige Bauteil, als auf diese Weise die unzureichende Abdichtung zwischen dem Verbindungselement und dem Bauteil durch eine Dichtung verbessert werden kann. Andererseits ist im Gegensatz zu einer vollständig beabstandeten Anordnung des Auflageabschnitts des Verbindungselements an dem jeweiligen Bauteil, etwa durch eine Dichtung nach Art einer Unterlegscheibe, zumindest die Innenfläche des Auflageabschnitts mit dem Bauteil in direktem Kontakt und sorgt so für eine mechanisch stabile Befestigung.

Das Maß, um das die Außenfläche des Auflageabschnitts gegenüber der Innenfläche zurückgesetzt ist, definiert den minimalen Abstand der Außenfläche von der Kontaktfläche des Bauteils, der genau dann vorliegt, wenn die Innenfläche des Auflageabschnitts an der Kontaktfläche des Bauteils unmittelbar anliegt. An diesen exakt definierten Abstand kann daher eine zwischen der Außenfläche und der Kontaktfläche angeordnete Dichtung perfekt angepasst sein, beispielsweise in der Hinsicht, dass ein resultierender Druck auf die Dichtung zu einer gewünschten Verformung der Dichtung und/oder zu einer gewünschten Verteilung eines Druckes der Dichtung auf die Kontaktfläche des Bauteils führt.

Vorzugsweise ist die Innenfläche des Auflageabschnitts des Verbindungselements eine Kreisringfläche. Dies ist insbesondere dann vorteilhaft, wenn das Verbindungselement um seine Mittelachse eine Rotationssymmetrie aufweist und beispielsweise durch Drehung um diese Mittelachse an dem Bauteil befestigt wird.

Eine bevorzugte Ausführungsform des erfindungsgemäßen Verbindungselements sieht vor, dass der axiale Abstand der Außenfläche von der Innenfläche des Auflageabschnitts des Verbindungselements radial nach außen abnimmt. Der axiale Abstand entspricht dabei im Wesentlichen dem Maß, um das die Außenfläche gegenüber der Innenfläche zurückgesetzt ist. Insbesondere kann die Innenfläche als Ganzes senkrecht zur Mittelachse des Verbindungselements stehen, wobei die Außenfläche dann nicht parallel zur Innenfläche, also zumindest nicht als Ganzes ebenfalls senkrecht zur Mittelachse des Verbindungselements ausgerichtet ist. Die Abnahme des axialen Abstands der Außenfläche von der Innenfläche kann kontinuierlich, insbesondere linear sein, sie kann aber auch zumindest teilweise gekrümmt oder auf andere Art geformt verlaufen. Insbesondere wenn die genannte Abnahme des Abstands linear ist, ist es bevorzugt, wenn der Winkel zwischen der Außenfläche und der Mittelachse großer als 45° ist, vorzugsweise großer als 60° und insbesondere großer als 80°. Der genaue Verlauf des axialen Abstands der Außenfläche von der Innenfläche sowie dessen Ausrichtung können vorteilhaft an das Zusammenwirken mit einer entsprechenden Dichtung angepasst sein.

Vorzugsweise weist der Auflageabschnitt des Verbindungselements eine die Innenfläche und die Außenfläche miteinander verbindende Übergangsfläche auf, die im Wesentlichen parallel zur Mittelachse verläuft. Dabei ist es bevorzugt, dass die Übergangsfläche einen in axialer Richtung variierenden Durchmesser aufweist, wobei insbesondere in der Übergangsfläche eine Ringnut ausgebildet sein kann oder die Übergangsfläche konisch mit in Richtung der Außenfläche abnehmendem Durchmesser verlaufen kann. Die Ausrichtung der Übergangsfläche zur Mittelachse und/oder ein besonders gestalteter Verlauf des Durchmessers der Übergangsfläche in axialer Richtung ermöglichen beispielsweise, eine an der Übergangsfläche angeordnete Dichtung sicher an dieser zu halten. Dazu kann die Übergangsfläche beispielsweise eine Ringnut zum Zusammenwirken mit der Dichtung oder andere Verläufe zur vorteilhaften form- oder kraftschlüssigen Verbindung mit der Dichtung aufweisen.

Bei einer weiteren vorteilhaften Ausführungsform bilden die Übergangsfläche und die Außenfläche einen Aufnahmeraum für eine ringförmige Dichtung. Ein solcher Aufnahmeraum ermöglicht es vorteilhafterweise, dass die Dichtung in den Auflageabschnitt des Verbindungselements integriert sein kann. Der Aufnahmeraum kann durch die Form, die Lage und/oder die Ausrichtung der Außenfläche und der Übergangsfläche derart an eine Form der Dichtung angepasst sein, dass besonders gute Dichteigenschaften erreicht werden. Insbesondere kann der Aufnahmeraum konstruktiv dadurch gebildet sein, dass die Außenfläche um die Innenfläche herum aus dem Auflageabschnitt des Verbindungselements, beispielsweise spanend, herausgearbeitet wird. So können auf einfache Weise auch Verbindungselemente mit Auflageabschnitten, die keine Innenfläche und dieser gegenüber zurückgesetzte Außenfläche aufweisen, zu erfindungsgemäßen Verbindungselementen umgearbeitet werden.

Der Aufnahmeraum kann so ausgebildet sein, dass eine darin angeordnete Dichtung bei Befestigung des Verbindungselements an einem Bauteil im Wesentlichen in dem Aufnahmeraum eingesperrt ist. Dies kann insbesondere dann der Fall sein, wenn der axiale Abstand der Außenfläche von der Innenfläche des Auflageabschnitts des Verbindungselements radial nach außen abnimmt, so dass durch diese Abnahme trotz Verformungen der Dichtung aufgrund von einwirkendem Druck ein Austreten der Dichtung radial nach außen aus dem Aufnahmeraum verhindert werden und die Dichtung daher mit hohem Druck an das Bauteil angedrückt werden kann.

Vorzugsweise liegt das Verhältnis zwischen der radialen Ausdehnung der Außenfläche und der axialen Ausdehnung der Übergangsfläche etwa zwischen 1:1 und 2:1, insbesondere zwischen 1,4:1 und 1, 7:1.

Bevorzugt ist das Verbindungselement eine Schraube, ein Mutterelement, ein Bolzenelement, ein Distanzstück und/oder ein Verlängerungsstück. Das Verbindungselement kann dabei mit dem Bauteil beispielsweise mittels eines weiteren Verbindungselements, etwa eine Schraube mittels eines Mutterelements, befestigt sein, wobei zwischen diesen Verbindungselementen weitere Verbindungselemente, etwa zur Verlängerung der Verbindung oder zum Definieren einer festen Distanz zwischen den Verbindungselementen, vorgesehen sein können. Ferner kann das Verbindungselement, etwa ein Mutterelement und/oder ein Bolzenelement, beispielsweise in die Kontaktfläche des Bauteils eingepresst, an die Kontaktfläche angenietet oder angeschweißt sein, um die Befestigung weiterer Verbindungselemente und/oder weiterer Bauteile zu ermöglichen.

Ein Material des Verbindungselements kann insbesondere ein Metall oder eine metallische Legierung sein und beispielsweise Edelstahl, Eisen, Chrom, Titan und/oder Aluminium umfassen.

Die Aufgabe wird außerdem gelöst durch eine Dichtung für ein erfindungsgemäßes Verbindungselement insbesondere nach einer der vorstehenden Ausführungsformen mit den Merkmalen des Anspruchs 10 und insbesondere dadurch, dass die Dichtung ringförmig ausgebildet ist und eine Mittelachse aufweist, wobei die Dichtung eine Oberseite zur Anlage an der Außenfläche des Auflageabschnitts des Verbindungselements, eine Innenseite, eine Unterseite zur Anlage an der Kontaktfläche des Bauteils, und eine Außenseite umfasst, wobei der Durchmesser der Außenseite in axialer Richtung variiert und am Übergang in die Unterseite am größten ist.

Da die Unterseite zur Anlage an der Kontaktfläche des Bauteils vorgesehen ist, stellt der Übergang zwischen der Außenseite und der Unterseite den äußeren Rand des Bereiches dar, an dem die Dichtung und das Bauteil miteinander in Kontakt stehen, wenn das Verbindungselement mit der Dichtung an dem Bauteil befestigt ist. Dass die Außenseite der Dichtung an diesem Übergang den größten Durchmesser aufweist, ist daher insofern vorteilhaft, als die Gesamtfläche, mit der die Dichtung an der Kontaktfläche des Bauteils anliegen kann, auf diese Weise besonders groß sein kann. Insbesondere kann die Unterseite der Dichtung die Innenfläche des Verbindungselements, für das die Dichtung vorgesehen ist, zu einer Gesamtfläche ergänzen, welche den Anforderungen einschlägiger Vorschriften und Richtlinien für die Anlage an der Kontaktfläche des Bauelements entspricht.

Anders ausgedrückt braucht erfindungsgemäß der Durchmesser der Innenfläche nur so groß zu sein, dass eine jeweilige einschlägige Vorschrift oder Richtlinie erfüllt, aber nicht übererfüllt ist. Letzteres ist bei bekannten Verbindungselementen ohne Dichtung häufig der Fall, da es dort wünschenswert sein kann, eine relativ große Anlage- oder Auflagefläche der Schraube mit der Kontaktfläche des Bauteils zur Anlage zu bringen und so die Anlage- oder Auflagefläche relativ weit radial nach außen reichen zu lassen. Erfindungsgemäß reicht ein einschlägige Vorschriften oder Richtlinien gerade erfüllender Durchmesser der Innenfläche dagegen aus, da durch die Dichtung effektiv eine Vergrößerung der Anlage- oder Auflagefläche und somit der insgesamt an der Kontaktfläche des Bauteils anliegenden Dichtfläche erreicht wird.

Ein weiterer Vorteil besteht darin, dass der genannte Übergangsbereich als Rand der Unterseite der Dichtung den potentiellen Eintrittsbereich für Verunreinigungen zwischen die Dichtung und ein jeweiliges Bauteil darstellt und der maximale Durchmesser der Außenseite der Dichtung an dieser Stelle einen möglichst spaltfreien und möglichst gering gestuften Übergang zwischen dem Bauteil und der Dichtung ermöglichen kann. Dabei ist es besonders bevorzugt, wenn der Übergangsbereich zwischen der Außenseite und der Unterseite spitzwinklig ausgeführt ist, wodurch der Übergang zwischen dem Bauteil und der Dichtung besonders glatt und kontinuierlich ausgebildet sein kann.

Vorzugsweise ist die Außenseite der Dichtung konkav geformt. Durch diese Form können Übergänge zwischen der Dichtung und angrenzenden Elementen wie einem Verbindungselement und einem Bauteil besonders kontinuierlich ausgebildet sein. Die konkave Formung der Außenseite kann außerdem insbesondere ein Wegleiten von Reinigungsflüssigkeit oder Verunreinigungen von möglichen Eintrittsstellen, wie etwa Spalten zwischen der Dichtung und dem Verbindungselement bzw. Bauteil, unterstützen, während eine konvexe Formung der Außenseite gerade Flüssigkeiten vielmehr zu solchen Eintrittsstellen führen würde.

In einer bevorzugten Ausführungsform weist die Dichtung in Umfangsrichtung einen Querschnitt in Form eines unregelmäßigen Fünfecks auf. Hierbei können insbesondere vier Ecken des Fünfecks Übergangsbereichen zwischen der Unterseite und der Innenseite, der Innenseite und der Oberseite, der Oberseite und der Außenseite bzw. der Außenseite und der Unterseite der Dichtung entsprechen.

Ferner ist es bevorzugt, wenn der Querschnitt der Dichtung ein gedachtes umgebendes Rechteck definiert, bei dem das Verhältnis zwischen in radialer Richtung verlaufender Kante und in axialer Richtung verlaufender Kante etwa zwischen 1:1 und 2:1 liegt, insbesondere zwischen 1,2:1 und 1,6:1. Vorteilhafterweise können hierbei die Form und die relativen Maße der Dichtung geeignet an ein Verbindungselement angepasst sein, für das die Dichtung vorgesehen sein kann.

Bevorzugt sind die Oberseite, die Innenseite und die Unterseite jeweils von wenigstens einer ebenen Fläche gebildet, wobei insbesondere die Oberseite und die Unterseite jeweils von genau einer ebenen Fläche gebildet sind und die Innenseite von wenigstens zwei ebenen Flächen gebildet ist. Da die Dichtung erfindungsgemäß ringförmig ausgebildet ist, ist unter einer ebenen Fläche hierbei insbesondere zu verstehen, dass diese Fläche in einem zur Mittelachse parallelen Querschnitt einer geraden Kante entspricht.

Bei einer weiteren bevorzugten Ausführungsform ist vorgesehen, dass die Oberseite und die Unterseite der Dichtung zumindest näherungsweise parallel zueinander sind. Bevorzugt ist außerdem der Winkel zwischen der Oberseite und/oder der Unterseite einerseits und der Mittelachse der Dichtung andererseits großer als 45°, vorzugsweise großer als 60° und insbesondere großer als 80°. Beispielsweise können sowohl die Oberseite als auch die Unterseite im Wesentlichen senkrecht zur Mittelachse angeordnet sein, von einer exakt senkrechten Anordnung aber dennoch zumindest geringfügig abweichen. Eine wie dargestellt gewinkelte Anordnung der Oberseite und/oder der Unterseite zur Mittelachse der Dichtung kann vorteilhafte Auswirkungen insbesondere auf die Verteilung eines Druckes haben, den die Dichtung auf die Kontaktfläche eines Bauteils ausüben kann, wenn sie, beispielsweise durch das Verbindungselement, an das Bauteil gedrückt wird.

Vorzugsweise variiert der Durchmesser der Innenseite der Dichtung in axialer Richtung und ist am Übergang in die Oberseite am größten. Ferner ist es bevorzugt, dass die Innenseite einen gedachten Freiraum begrenzt, der durch eine gedachte Verlängerung der Oberseite in Richtung der Mittelachse und eine gedachte, vom radial inneren Ende der Unterseite ausgehende und parallel zur Mittelachse verlaufende Ebene definiert ist. Dabei oder alternativ dazu kann die Innenseite vorzugsweise wenigstens zwei in axialer Richtung aufeinanderfolgende Abschnitte aufweisen, zwischen denen eine Kante ausgebildet ist, wobei insbesondere genau zwei Abschnitte vorgesehen sind, von denen der eine von der Unterseite ausgeht und der andere in die Oberseite übergeht. Insbesondere kann bei einer derartigen Ausführung der Querschnitt der Dichtung die Form eines unregelmäßigen Fünfecks aufweisen, wobei die Oberseite, die Außenseite, die Unterseite sowie der eine Abschnitt und der andere Abschnitt der Innenseite der Dichtung jeweilige Kanten des Fünfecks bilden.

Besonders bevorzugt ist es, wenn ein erster Abschnitt der Innenseite von der Unterseite ausgeht und zumindest näherungsweise parallel zur Mittelachse verläuft, und wenn ein zweiter Abschnitt, der den ersten Abschnitt und die Oberseite miteinander verbindet, etwa unter einem Winkel von 20° bis 80°, bevorzugt von 30° bis 60°, und insbesondere von 40° bis 50°, zur Mittelachse von dem ersten Abschnitt zur Oberseite verläuft.

Die genannten Ausführungsformen der Dichtung, deren Merkmale insbesondere die Ausrichtung der Seiten der Dichtung zueinander und zur Mittelachse der Dichtung sowie die bevorzugte Aufteilung der Innenseite in zumindest zwei Abschnitte betreffen, weisen jeweilige Vorteile auf für das Zusammenspiel der Dichtung mit einem Verbindungselement, für das sie vorgesehen ist, für die Art und das Maß der Verformung der Dichtung, wenn sie beispielsweise zwischen einem Verbindungselement und einem Bauteil eingespannt ist, sowie für die Verteilung des Drucks innerhalb der Dichtung mit den daraus resultierenden Auswirkungen darauf, mit welcher Druckverteilung Druck von der Dichtung auf anliegende Elemente, insbesondere auf das Bauteil, übertragen wird.

Vorzugsweise umfasst das Material der Dichtung zumindest ein Elastomer, vorzugsweise Silikon oder Fluor-Polymer-Kautschuk, insbesondere VITON. VITON ist ein Handelsname der DuPont AG und aufgrund seiner Härte und Dichte besonders für erfindungsgemäße Dichtungen geeignet. Es können aber eine Vielzahl verschiedener Elastomere auch in Mischungen oder in separater Anordnung als Material für die Dichtung verwendet werden. Dabei ist es vorteilhaft, wenn das Material geeignet ist, sich im Rahmen der Einwirkungen auf die Dichtung, die bei der Verwendung der Dichtung zwischen einem Verbindungselement und der Kontaktfläche eines Bauteils auftreten, zumindest teilweise elastisch, vorzugsweise überwiegend elastisch zu verformen. Ferner ist es besonders bevorzugt, wenn das Material der Dichtung eine Härte mit einem Shore-A-Wert zwischen 50 und 100, vorzugsweise zwischen 70 und 90, insbesondere zwischen 80 und 85 aufweist.

Eine bevorzugte Ausführungsform sieht ferner vor, dass das Material der Dichtung geeignet ist, bei auf die von einem Edelstahl gebildete Kontaktfläche des Bauteils gedrückter Unterseite eine gasdichte Verbindung herzustellen. Somit kann eine derartige Dichtung vorteilhafterweise nicht nur zum Schutz gegen das unerwünschte Eindringen von Flüssigkeiten in gewisse Bereiche, etwa in ein Bauteil oder durch ein Bauteil hindurch, sondern auch gegen das unerwünschte Eindringen von Gasen eingesetzt werden.

Weiterhin wird die Aufgabe auch gelöst durch eine Anordnung aus wenigstens einem erfindungsgemäßen Verbindungselement, insbesondere in einer der oben genannten Ausführungsformen, und wenigstens einer erfindungsgemäßen Dichtung, insbesondere gemäß einer der vorstehend dargelegten Ausführungsformen, mit den Merkmalen des Anspruchs 25 und insbesondere dadurch, dass die Dichtung in einer Aufnahme des Verbindungselementes angeordnet ist. Dabei kann die Aufnahme insbesondere einem durch die Außenfläche und einer die Innenfläche und die Außenfläche verbindenden Übergangsfläche gebildeten Aufnahmeraum des Verbindungselements entsprechen. Auf diese Weise ist die Dichtung in den Auflageabschnitt des Verbindungselements integriert und kann mit diesem eine beispielsweise gemeinsam zu montierende Einheit bilden.

Eine derartige Anordnung kann dabei vorteilhafterweise ein Verbindungselement und eine Dichtung umfassen, die geeignet aufeinander abgestimmt sind, um eine bestmögliche Abdichtung zu erzielen. Insbesondere kann die Aufnahme des Verbindungselements bezüglich ihrer Form und ihrer Ausmaße an die Form und die Ausmaße der Dichtung angepasst sein.

In einer vorteilhaften Ausführungsform ist die Dichtung derart in der Aufnahme angeordnet, dass die Oberseite der Dichtung der Außenfläche des Auflageabschnitts des Verbindungselements zugewandt ist. Da erfindungsgemäß der Durchmesser der Außenseite der Dichtung am Übergang in die Unterseite am größten ist, befindet sich demnach der größte Durchmesser der Außenseite an der von der Außenfläche des Auflageabschnitts abgewandten Seite der Dichtung und kann also insbesondere, wenn die Anordnung an einem Bauteil befestigt ist, einer Kontaktfläche des Bauteils zugewandt sein, wodurch eine möglichst großflächige Wechselwirkung der Anordnung mit dem Bauteil erreicht werden kann.

Weiterhin ist es bevorzugt, wenn die Dichtung gegen ein Lösen von dem Verbindungselement, insbesondere durch Reibschluss und/oder Formschluss, gesichert ist. Eine Sicherung der Dichtung gegen ein Lösen von dem Verbindungselement kann alternative dadurch erreicht werden, dass die Dichtung an das Verbindungselement angespritzt ist. Andere Möglichkeiten der Sicherung umfassen lösbare oder unlösbare Klebepunkte, allgemeine Klebeeigenschaften des Materials der Dichtung oder von Teilen der Dichtung sowie die Sicherung durch gesonderte Sicherungselemente. Die Sicherung der Dichtung an dem Verbindungselement kann insbesondere beim Transport bzw. Handhabung und bei der Befestigung der Anordnung aus Dichtung und Verbindungselement an einem Bauteil vorteilhaft sein, beispielsweise schon dadurch, dass die Dichtung und das Verbindungselement nicht gesondert voneinander verloren gehen können.

Eine besonders bevorzugte Ausführungsform sieht vor, dass ein Durchmesser der Innenseite der Dichtung kleiner als ein maximaler Durchmesser der Innenfläche des Auflageabschnitts des Verbindungselements ist, insbesondere kleiner als ein maximaler Durchmesser einer die Innenfläche und die Außenfläche des Auflageabschnitts verbindenden Übergangsfläche. Dies kann zur Folge haben, dass die Dichtung in die Aufnahme des Verbindungselements nur dadurch eingebracht werden kann, dass sie zumindest teilweise gedehnt wird. In der Aufnahme kann die Dichtung dann beispielsweise zumindest teilweise relaxieren. Zusätzlich kann dabei z.B. eine Hinterschneidung der Dichtung in ein komplementäres Profil beispielsweise an der Übergangsfläche des Verbindungselements eingreifen, um die Dichtung so durch Formschluss vor einem Lösen von dem Verbindungselement zu schützen. Außerdem kann die Dichtung auch nach Einbringen in die Aufnahme des Verbindungselements weiterhin gedehnt sein, so dass die Dichtung beispielsweise gegen die Übergangsfläche drückt und somit aufgrund von Reibschluss an dem Verbindungselement gesichert ist.

Weiterhin ist es vorteilhaft, wenn der Winkel zwischen der Oberseite und/oder der Unterseite der Dichtung einerseits und der Mittelachse der Dichtung andererseits zumindest im Wesentlichen gleich dem Winkel zwischen der Außenfläche des Auflageabschnitts einerseits und der Mittelachse des Verbindungselements andererseits ist. Auf diese Weise können insbesondere die Oberseite der Dichtung und die Außenfläche des Verbindungselements zueinander ausgerichtet sein, sodass die Dichtung besonders gut in die Aufnahme des Verbindungselements passt.

Bei einer weiteren Ausführungsform ist die axiale Höhe der Dichtung zumindest bereichsweise großer als das Maß, um das die Außenfläche des Auflageabschnitts gegenüber der Innenfläche des Auflageabschnitts des Verbindungselements zurückgesetzt ist. Dies hat vorteilhafterweise zur Folge, dass beim Befestigen der Anordnung an ein Bauteil dessen Kontaktfläche die Aufnahme für die Dichtung auf der der Außenfläche gegenüberliegenden Seite begrenzt, wodurch die Dichtung in der Aufnahme zusammengedrückt und verformt werden kann. Dabei ist die Dichtung vorteilhafterweise so ausgebildet, dass eine derartige Verformung gerade zu den gewünschten Dichtungseigenschaften führt.

Bevorzugt ist in einem unverformten Zustand der Dichtung durch die Innenseite der Dichtung sowie durch die Außenfläche und eine die Innenfläche und die Außenfläche miteinander verbindende Übergangsfläche des Verbindungselements ein Hohlraum begrenzt. Insbesondere kann sich dieser Hohlraum zusammen mit der Dichtung innerhalb der Aufnahme des Verbindungselements befinden und somit der Dichtung Platz für Verformungen bieten, wenn diese zwischen dem Verbindungselement und einem Bauteil zusammengedrückt wird.

Vorzugsweise steht die Dichtung zumindest in einem Übergangsbereich zwischen der Außenseite und der Unterseite radial über die Außenfläche des Auflageabschnitts des Verbindungselements hinaus nach außen vor.

Weiterhin ist es bevorzugt, wenn der Übergangsbereich zwischen der Oberseite und der Außenseite der Dichtung gegenüber dem radial äußeren Rand der Außenfläche des Auflageabschnitts des Verbindungselements radial nach innen zurückgesetzt ist, insbesondere wenn die Dichtung nicht durch ein Befestigen der Anordnung an einem Bauteil verformt ist. Dass der Übergangsbereich zwischen der Oberseite und der Außenseite der Dichtung radial zurückgesetzt ist, kann dann insofern vorteilhaft sein, als dadurch zwischen dem genannten Übergansbereich und dem radial äußeren Rand der Außenfläche ein Abstand geschaffen wird, der, ähnlich dem Hohlraum einer der vorstehend erläuterten Ausführungsformen, Platz für eine Verformung der Dichtung bieten kann.

Die Aufgabe wird ferner gelöst durch die Verwendung eines erfindungsgemäßen Verbindungselements, insbesondere gemäß einer der dargestellten Ausführungsformen, und einer erfindungsgemäßen Dichtung, insbesondere gemäß einer der dargestellten Ausführungsformen, oder einer erfindungsgemäßen Anordnung, insbesondere gemäß einer der dargelegten Ausführungsformen, an einer Maschine zur Bearbeitung und/oder Verarbeitung von Lebensmittelprodukten.

Die Aufgabe wird zudem gelöst durch eine Baugruppe an einer oder für eine Maschine zur Bearbeitung und/oder Verarbeitung von Lebensmittelprodukten, mit zumindest einer erfindungsgemäßen Anordnung, beispielsweise gemäß einer der vorstehend erläuterten Ausführungsformen, und mit wenigstens einem Bauteil, insbesondere einem tafelförmigen Element, bevorzugt einem Edelstahlblech, mit den Merkmalen des Anspruchs 35 und insbesondere dadurch, dass das Verbindungselement an dem Bauteil derart befestigt ist, dass die Dichtung zwischen dem Verbindungselement und der Kontaktfläche des Bauteils zusammengedrückt ist und einen verformten Zustand einnimmt.

Die Befestigung der Anordnung an dem Bauteil bewirkt demnach eine Verformung der Dichtung, wodurch die Dichtung insbesondere einen Bereich zwischen dem Verbindungselement und dem Bauteil, der der Aufnahme des Verbindungselements entsprechen kann, derart ausfüllen kann, dass ein Eindringen von Verunreinigungen, Flüssigkeiten und/oder Gasen zwischen die Dichtung und das Verbindungselement bzw. das Bauteil sowie die Ablagerung von Verunreinigungen in Spalten zwischen diesen Komponenten verhindert werden kann.

Vorzugsweise ist der Abstand zwischen der Innenseite der Dichtung und der Außenseite der Dichtung gegenüber einem unverformten Zustand vergrößert. Weiterhin ist es bevorzugt, wenn in einem die Mittelachse enthaltenden Querschnitt der Verlauf der Außenseite der Dichtung gegenüber einem unverformten Zustand der Dichtung im Wesentlichen unverändert ist. Die Verformung der Dichtung kann also dazu führen, dass sich die Dichtung, etwa aufgrund eines axial wirkenden Druckes zwischen dem Verbindungselement und dem Bauteil, in radialer Richtung verbreitert, wobei aber die Form der Außenseite bezüglich ihres Querschnitts im Wesentlichen erhalten bleiben kann. Insbesondere kann dann die Form der Dichtung in deren verformtem Zustand bezüglich deren Unterseite, Innenseite und Oberseite durch einen von der Kontaktfläche des Bauteils, einer Übergangsfläche zwischen der Innenfläche und der Außenfläche des Verbindungselements sowie der Außenfläche des Verbindungselements gebildeten Raum definiert sein, während sie bezüglich der Außenseite der Dichtung durch die Form der Außenseite im unverformten Zustand der Dichtung vorgegeben sein kann. Dies erlaubt es vorteilhafterweise, die Form der Außenseite der Dichtung im verformten Zustand präzise vorzugeben und so ideal an gewünschte, insbesondere möglichst kontinuierliche und spaltfreie Übergänge der Außenseite zum Verbindungselement bzw. zum Bauteil hin zu ermöglichen.

Bei einer bevorzugten Ausführungsform ist die Dichtung gegenüber einem unverformten Zustand zumindest teilweise radial weiter nach außen gedrückt, wobei insbesondere der höchste Druck, den die Dichtung auf die Kontaktfläche des Bauteils ausübt, in einem radial äußeren Bereich und bevorzugt am radial äußeren Randbereich der Dichtung gegeben ist. Beispielsweise kann eine Dichtung, deren Außenseite im unverformten Zustand gegenüber einem äußeren Rand der Außenfläche des Verbindungselements radial zurückgesetzt ist, derart teilweise radial weiter nach außen gedrückt sein, dass die genannte Zurücksetzung aufgehoben ist und dass ferner der maximale Durchmesser der Außenseite am Übergangsbereich zwischen Außenseite und Unterseite der Dichtung ebenfalls radial weiter nach außen gedrückt wird. Dadurch kann vorteilhafterweise die Fläche der Anordnung aus Verbindungselement und Dichtung, die mit der Kontaktfläche des Bauteils in Kontakt steht, vergrößert werden.

Dass der Druck, den die Dichtung auf die Kontaktfläche des Bauteils ausübt, in einem radial äußeren Bereich und bevorzugt am radial äußeren Randbereich der Dichtung am höchsten ist, hat ferner die vorteilhafte Wirkung, dass in diesem Bereich, der aufgrund seiner Randlage typischerweise der für ein Eindringen von Verunreinigungen gefährdetste Bereich ist, am zuverlässigsten vor einem solchen Eindringen geschützt wird.

Weiterhin ist es vorteilhaft, wenn ein im unverformten Zustand von der Dichtung und dem Verbindungselement begrenzter Hohlraum zumindest im Wesentlichen vollständig durch die verformte Dichtung ausgefüllt ist. Dieser Hohlraum kann dann als Druckausgleichsraum insbesondere Anteile der infolge des axialen Drucks radialen Ausdehnung der Dichtung aufnehmen, so dass die Verteilung von Spannungen und Verformungen in der Dichtung vorteilhafterweise weniger einseitig und gleichmäßiger sein kann, was z.B. zu einer längeren Haltbarkeit der Dichtung führen kann.

Bei einer weiteren vorteilhaften Ausführungsform ist vorgesehen, dass die Außenfläche des Auflageabschnitts des Verbindungselements mit der Oberseite der Dichtung radial nach außen bündig abschließt. Das hat insbesondere den Vorteil, dass der Übergang zwischen der Außenfläche der Dichtung und dem angrenzenden Verbindungselement ohne Stufe erfolgt, in der sich ansonsten leicht Verunreinigungen absetzen oder durch die ansonsten leicht Verunreinigungen in einen Spalt zwischen der Dichtung und dem Verbindungselement eindringen könnten.

Weiterhin ist eine Ausführungsform bevorzugt, bei der ein Eindringen von Flüssigkeit, Schmutz und/oder Gas von außen in den Bereich des Befestigungsabschnitts verhindert ist. Dadurch kann sichergestellt werden, dass sich derartige Stoffe nicht in Zwischenbereichen der Komponenten der Baugruppe ablagern können und sich ebensowenig durch gegebenenfalls vorhandene Öffnungen in dem Bauteil der Baugruppe in Bereiche eindringen können, in denen sie Störungen oder Beschädigungen hervorrufen oder nicht zuverlässig entfernt werden könnten und daher die Hygiene gefährden würden.

Die Erfindung wird nachfolgend beispielhaft anhand der beigefügten Zeichnungen beschrieben. Gleiche Bezugszeichen in den Figuren beziehen sich dabei auf gleiche oder einander entsprechende Elemente.
- Fig. 1a und 1b: zeigen jeweils einen Querschnitt einer Ausführungsform eines erfindungsgemäßen Verbindungselements.
- Fig. 2: zeigt einen Querschnitt einer Ausführungsform einer erfindungsgemäßen Dichtung.
- Fig. 3a und 3b: zeigen einen Querschnitt einer erfindungsgemäßen Anordnung aus einem Verbindungselement und einer Dichtung sowie eines Bauteils bzw. eine erfindungsgemäße Baugruppe mit den genannten Komponenten im unbefestigten (Fig. 3a) bzw. befestigten (Fig. 3b) Zustand.
- Fig. 4: zeigt im Querschnitt eine Anordnung verschiedener Ausführungsformen erfindungsgemäßer Verbindungselemente mit jeweiligen Dichtungen an einem Bauteil.

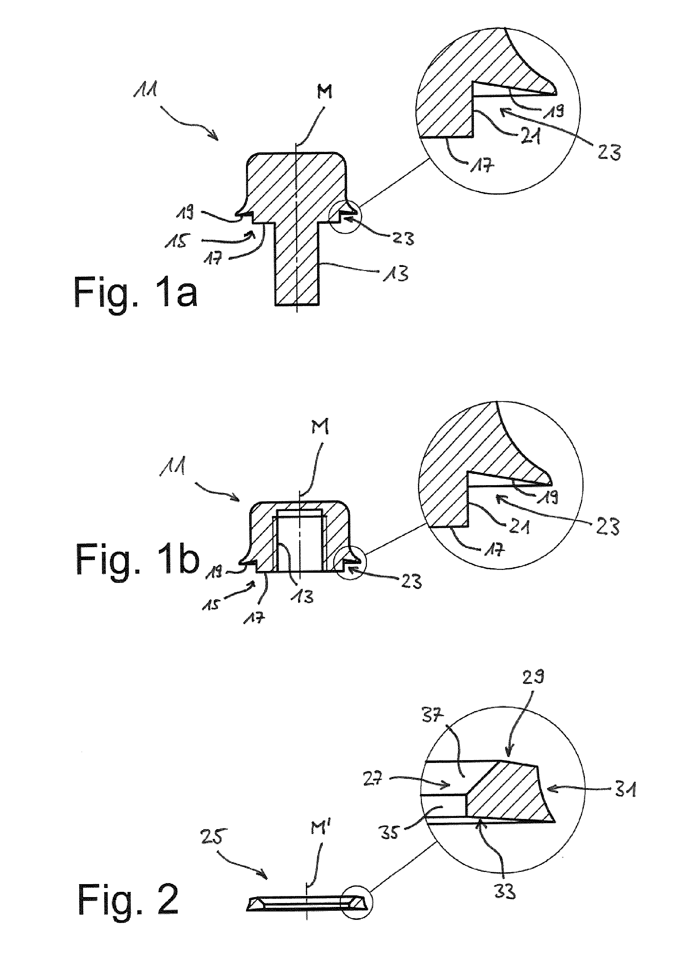

Bei der in Fig. 1a gezeigten Ausführungsform eines erfindungsgemäßen Verbindungselements 11 handelt es sich um eine Edelstahl-Schraube mit einem Schraubenschaft mit Gewinde als dem Befestigungsabschnitt 13 des Verbindungselements 11. Dieser definiert eine Mittelachse M, bezüglich der die Schraube 11 im Wesentlichen rotationssymmetrisch ist, wobei der Schraubenkopf ein sechseckiges Profil aufweist. Die Unterseite des Schraubenkopfes bildet einen Auflageabschnitt 15, der eine Innenfläche 17 und eine die Innenfläche 17 umgebende, axial gegenüber der Innenfläche 17 zurückgesetzte Außenfläche 19 aufweist, die über eine zylindermantelförmige und parallel zur Mittelachse M ausgerichtete Übergangsfläche 21 verbunden sind. Die Innenfläche 17 und die Außenfläche 19 des Auflageabschnitts 15 sind kreisringförmig und zu der Mittelachse M konzentrisch ausgerichtet.

Während die Innenfläche 17 senkrecht zur Mittelachse M verläuft, weist die Außenfläche 19 eine Abweichung von einer bezüglich der Mittelachse M senkrechten Ausrichtung auf. Dies kann insbesondere der Vergrößerung in Fig. 1a entnommen werden. In der Vergrößerung ist außerdem besonders gut der durch die Übergangsfläche 21 und die Außenfläche 19 gebildete Aufnahmeraum 23 zur Aufnahme einer in Fig. 1a nicht gezeigten Dichtung 25 zu erkennen. Das gezeigte Profil des Schraubenkopfes mit einer umfänglichen Erweiterung nach Art einer Hutkrempe entspricht dabei im Wesentlichen dem einer bekannten Schraube, für die keine Dichtung vorgesehen ist, und aus der das in Fig. 1a gezeigte Profil im Wesentlichen durch Entfernen des dem Aufnahmeraum 23 entsprechenden Volumens, beispielsweise spanend, herausgearbeitet werden kann.

Die Fig. 1b zeigt eine der in Fig. 1a gezeigten Ausführungsform weitgehend entsprechende Ausführungsform eines erfindungsgemäßen Verbindungselements 11 mit dem Unterschied, dass es sich dabei nicht um eine Schraube bzw. ein Bolzenelement, sondern um ein Mutterelement 11 aus Edelstahl handelt, dessen Befestigungsabschnitt 13 als ein Sackloch mit Innengewinde ausgebildet ist. Insbesondere der Aufnahmeraum 23 des Mutterelements 11 ist im Wesentlichen identisch zu dem der in Fig. 1a gezeigten Schraube 11. Eine für die in Fig. 1a gezeigte Schraube 11 geeignete Dichtung 25 ist daher gleichermaßen für das in Fig. 1b gezeigte Mutterelement 11 geeignet.

In Fig. 2 ist eine Ausführungsform einer erfindungsgemäßen Dichtung 25 gezeigt, die kreisringförmig und drehsymmetrisch um eine Mittelachse M' ausgebildet ist und einen konstanten Querschnitt aufweist, der in der Vergrößerung in Fig. 2 deutlicher dargestellt ist. Der Querschnitt der Dichtung 25 weist die Form eines unregelmäßigen Fünfecks auf. Die Seitenkanten dieses Fünfecks entsprechen dabei der Innenseite 27, der Oberseite 29, der Außenseite 31 und der Unterseite 33 der Dichtung 25, wobei bis auf die Außenseite 31 alle Seiten 27, 29, 33 durch gerade Kanten des Querschnitts gebildet sind. Zudem entspricht die Innenseite 27 zwei Kanten des Querschnitts (links und links oben in Fig. 2), die einen ersten Abschnitt 35 und einen zweiten Abschnitt 37 der Innenseite 27 bilden, zwischen denen eine umlaufende Kante ausgebildet ist. Der zweite Abschnitt 37 ist in einem Winkel von etwa 45° zum ersten Abschnitt 35 der Innenseite 27 angeordnet. Die Oberseite 29 und die Unterseite 33 der Dichtung 25 sind zueinander parallel und weisen zur Mittelachse M' einen Winkel auf, der ein wenig kleiner als 90° ist. Die der Außenseite 31 der Dichtung 25 entsprechende Kante des Querschnitts ist bogenförmig und derart in nur eine Richtung gekrümmt, dass das Fünfeck und ebenso die Außenseite 31 selbst konkav sind.

In der gezeigten Ausführungsform besteht die Dichtung 25 aus VITON, einem Fluor-Polymer-Kautschuk der DuPont AG, und weist einen Shore-A-Wert zwischen 80 und 85 auf. Die Farbe der Dichtung 25 (in Fig. 2 nicht gezeigt) ist ein Blauton (insbesondere RAL 5002), um zum einen die Dichtung 25 optisch gegenüber der grau-metallischen Erscheinung des Verbindungselements 11 abzuheben und so die optische Überprüfung des richtigen Sitzes der Dichtung 25 zu vereinfachen und um zum anderen Verunreinigungen an der Dichtung 25 durch Reste von Lebensmittelprodukten, die in der Regel nicht blau sind, deutlicher sichtbar werden zu lassen.

Abgesehen davon wird durch diese Farbgebung eine in ästhetischer Hinsicht auffällige Erscheinung geschaffen und außerdem das Vorhandensein einer Dichtung betont, womit einem Betrachter signalisiert wird, dass die betreffende Verbindung höchsten Hygienemaßstäben gerecht wird.

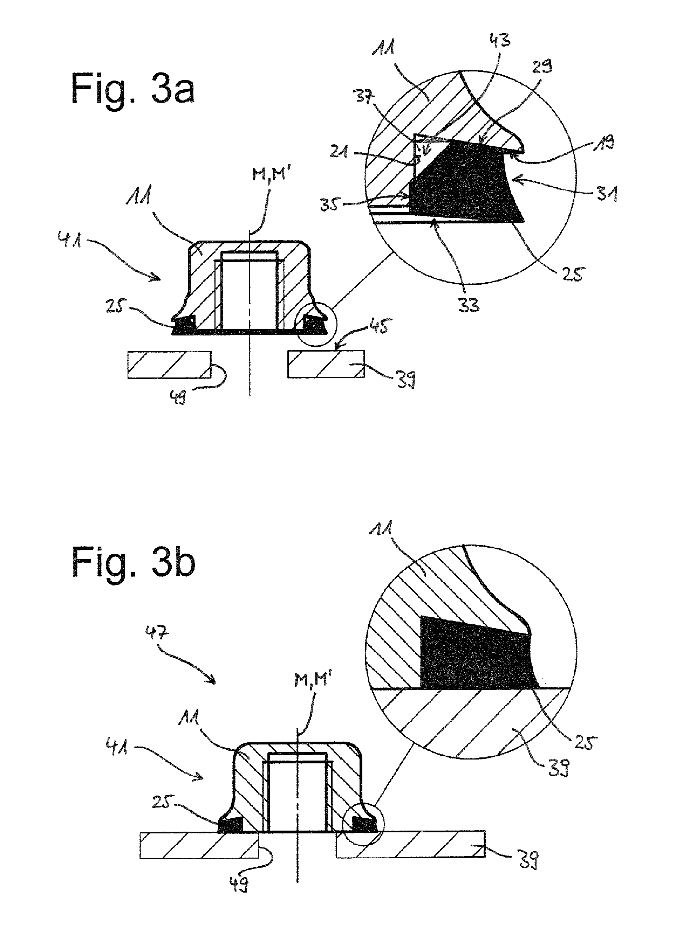

Das in Fig. 1b gezeigte Mutterelement 11 und die in Fig. 2 gezeigte Dichtung 25 sind in Fig. 3a aneinander angeordnet und zusammen mit einem Bauteil 39 dargestellt, an dem diese Anordnung 41 aus Verbindungselement 11 und Dichtung 25 befestigbar ist. Wie insbesondere aus der Vergrößerung in Fig. 3a und daran zu erkennen ist, dass die Innenseite 27 der Dichtung 25 in die Innenfläche 17 des Mutterelements 11 hineinragt, ist die Darstellung nicht realitätsgetreu, sondern lediglich eine Überlagerung des in Fig. 1b gezeigten Verbindungselements 11 und der in Fig. 2 gezeigten Dichtung 25, um die Dichtung 25 in ihrem unverformten Zustand relativ zu dem Verbindungselement 11, an dem sie angeordnet wird, abzubilden.

Da bei der gezeigten Ausführungsform der Durchmesser der Innenseite 27 der Dichtung 25 kleiner ist als der Durchmesser der Übergangsfläche 21 des Verbindungselements 11, wird im realen Fall durch das Einbringen der Dichtung 25 in den Aufnahmeraum 23 des Verbindungselements 11 die Dichtung 25 bereits gedehnt und verformt, noch bevor diese Anordnung 41 an dem Bauteil 31 befestigt wird. Aufgrund dieser (hier nicht gezeigten) Verformung ist die Dichtung 25 durch Reibschluss gegen ein unbeabsichtigtes Lösen vom Verbindungselement 11 gesichert. Wenn die Dichtung 25 in dem Aufnahmeraum 23 des Verbindungselements 11 angeordnet ist, kommen die jeweiligen Mittelachsen M, M' zur Überlagerung, so dass die gesamte Anordnung 41 im Wesentlichen rotationssymmetrisch um eine gemeinsame Mittelachse M, M' ist.

Aus der überlagerten Darstellung der Fig. 3a wird deutlich, dass die Oberseite 29 und die Unterseite 33 der Dichtung 25 parallel zur Außenfläche 19 des Verbindungselements 11 sind und dass die Oberseite 29 an der Außenfläche 19 anliegt. Dementsprechend sind der erste Abschnitt 35 der Innenseite 27 der Dichtung 25 und die Übergangsfläche 21 des Verbindungselements 11 parallel zueinander und liegen aneinander an, wenn die Dichtung 25 in dem Aufnahmeraum 23 des Verbindungselements 11 angeordnet ist. Der zweite Abschnitt 37 der Innenseite 27 bildet dann mit Teilen der Außenfläche 19 und der Übergangsfläche 21 des Verbindungselements 11 einen Druckentlastungsraum 43, der kreisringförmig innerhalb des Aufnahmeraums 23 durch die genannten Flächen 37, 19, 21 begrenzt wird.

Wenn die Anordnung 41 aus Verbindungselement 11 und Dichtung 25 an einer Kontaktfläche 45 des Bauteils 39 befestigt wird, wie es in Fig. 3b (hier nun in realistischer Darstellung) abgebildet ist, wird die Dichtung 25 durch den Druck, der durch das Verbindungselement 11 und das Bauteil 39, zwischen denen sie eingespannt ist, wirkt, so verformt, dass sie im Wesentlichen den gesamten Aufnahmeraum 23 ausfüllt, der dann nicht mehr nur durch die Außenfläche 19 und die Übergangsfläche 21 des Verbindungselements 11, sondern auch durch die Kontaktfläche 45 des Bauteils 39 begrenzt wird. Während der bogenförmige Verlauf der Außenseite 31 der Dichtung 25 dabei im Wesentlichen erhalten bleibt, wie vor allem der Vergrößerung in Fig. 3b zu entnehmen ist, verformt sich insbesondere der zweite Abschnitt 37 der Innenseite 27 der Dichtung 25 derart, dass der gesamte Druckentlastungsraum 43 ausgefüllt wird. Der bezüglich der Mittelachse M, M' axiale Druck auf die Dichtung 25 bewirkt zudem im Wesentlichen eine radiale Ausdehnung der Dichtung 25, die aufgrund der gewählten Ausmaße von Dichtung 25 und Verbindungselement 11 gerade so bemessen ist, dass der Übergang zwischen der Oberseite 29 und der Außenseite 31 im verformten Zustand der Dichtung 25 denselben Durchmesser hat, wie der äußere Rand der Außenfläche 19 des Verbindungselements 11, wodurch die Außenseite 31 bündig mit dem Verbindungselement 11 abschließt.

Der Übergang zwischen der Außenseite 31 und der Unterseite 33 der Dichtung 25 ist spitzwinklig, der Winkel zwischen der Dichtung 25 und dem Bauteil 39 ist daher stumpfwinklig, was zu einem im Wesentlichen kontinuierlichen Übergang zwischen dem Bauteil 39 und der Dichtung 25 führt. Ferner ist insbesondere der Druck, den die Dichtung 25 auf das Bauteil 39 ausübt, im Bereich dieses Übergangs am größten. Dadurch wird die Bildung eines Spaltes zwischen der Dichtung 25 und dem Bauteil 39, durch die Verunreinigungen eindringen oder in der sich Verunreinigungen ablagern könnten, zuverlässig verhindert.

Bei einer wie in Fig. 3b gezeigten Baugruppe 47 mit einer Anordnung 41 aus einem Verbindungselement 11 und einer Dichtung 25, die an einem Bauteil 39 befestigt ist, wird somit zuverlässig verhindert, dass Verunreinigungen etwa durch mit Hochdruck eingebrachte Reinigungsflüssigkeiten in die Baugruppe 47 eindringen oder sogar durch Öffnungen 49 in dem Bauteil 39 hindurchtreten können.

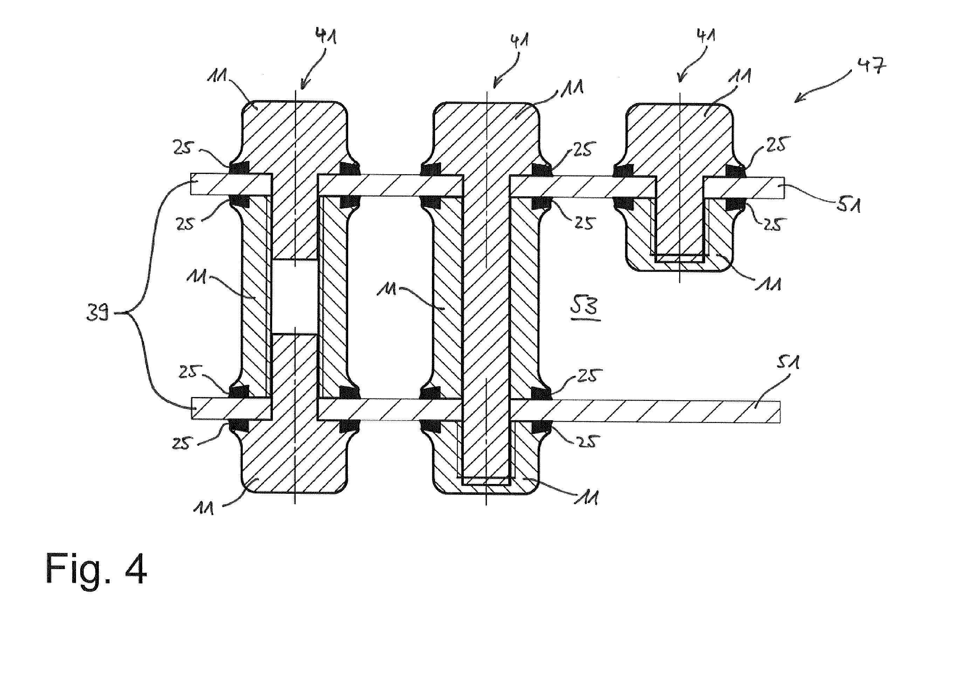

Fig. 4 zeigt ein Bauteil 39, das zwei Edelstahlbleche 51 mit einem Hohlraum 53 dazwischen umfasst, wie es typischerweise als Wandabschnitt für Maschinen zur Bearbeitung und/oder Verarbeitung von Lebensmittelprodukten eingesetzt werden kann. Daran sind exemplarisch verschiedene Verbindungselemente 11 angeordnet, die jeweils eine oder mehrere zur Abdichtung der Befestigung an dem Bauteil 39 in den Aufnahmeraum 23 ihres jeweiligen Auflageabschnitts 15 integrierte Dichtungen 25 aufweisen. Der Hohlraum 39 braucht dabei nicht abgeschlossen zu sein, sondern kann auch ein zu einer oder mehreren Seiten hin offener Zwischenraum sein, wie es z.B. der Fall ist, wenn zwei Module miteinander verbunden werden sollen, dabei aber zwischen den einander zugewandten, die Modulaußenseiten bildenden Bauteilen 39, insbesondere Blechelementen, ein Abstand vorhanden sein soll.

Die links gezeigte Anordnung 41 umfasst zwei Schrauben 11 (oben, unten) sowie ein dazwischen angeordnetes Distanzstück 11 mit einem Innengewinde als Befestigungsabschnitt 13, das mit Außengewinden als den Befestigungsabschnitten 13 der Schrauben zusammenwirkt. Durch das Distanzstück 11 können der Abstand der Edelstahlbleche 51 und damit die Dicke des Hohlraums 53 definiert werden.

In Fig. 4 rechts oben ist eine an dem oberen der zwei Edelstahlbleche 51 befestigte Anordnung 41 einer Schraube 11 (oben) und eines Mutterelements 11 (unten) gezeigt, wobei die Schraube 11 und das Mutterelement 11 miteinander verschraubt sind und die Anordnung zu beiden Seiten des Edelstahlbleches abgedichtet ist. Eine ähnliche Anordnung 41 aus Schraube 11 (oben) und Mutter 11 (unten) ist in der Mitte der Fig. 4 dargestellt, wobei die Schraube 11 an dem oberen Edelstahlblech 51, die Mutter 11 an dem unteren Edelstahlblech 51 und zwischen den Edelstahlblechen ein dem Distanzstück 11 der linken Anordnung 41 vergleichbares Distanzstück 11, das allerdings kein Innengewinde aufweist, angeordnet sind. Der Befestigungsabschnitt 13 der Schraube ragt durch das obere Edelstahlblech 51, durch das Distanzstück 11 und das untere Edelstahlblech 51 hindurch, so dass ein Auf3engewinde der Schraube 11 mit einem Innengewinde der Mutter 11 zur Befestigung der Anordnung 41 an das Bauteil 39 zusammenwirken kann. Der gewindelose Durchgang des Distanzstücks 11, durch den sich der Befestigungsabschnitt 13 der Schraube hindurch erstreckt, ist ebenfalls ein Befestigungsabschnitt im Sinne der Erfindung.

Wie bei allen in Fig. 4 gezeigten Anordnungen 41 werden durch das Befestigen der Anordnung 41 an das Bauteil 39 die in den Aufnahmeräumen 23 der Schraube 11 und der Mutter 11 angeordneten Dichtungen 25 so verformt, dass ein Eindringen von Verunreinigungen zuverlässig verhindert wird.

### Bezugszeichenliste

- 11: Verbindungselement
- 13: Befestigungsabschnitt
- 15: Auflageabschnitt
- 17: Innenfläche
- 19: Außenfläche
- 21: Übergangsfläche
- 23: Aufnahmeraum
- 25: Dichtung
- 27: Innenseite
- 29: Oberseite
- 31: Außenseite
- 33: Unterseite
- 35: erster Abschnitt
- 37: zweiter Abschnitt
- 39: Bauteil
- 41: Anordnung
- 43: Druckentlastungsraum
- 45: Kontaktfläche
- 47: Baugruppe
- 49: Öffnung
- 51: Edelstahlbleche
- 53: Hohlraum

## Patentansprüche

1. Verbindungselement (11) für Maschinen zur Bearbeitung und/oder Verarbeitung von Lebensmittelprodukten, das mittels eines eine Mittelachse (M) definierenden Befestigungsabschnitts (13) an einem Bauteil (39) der Maschine befestigbar ist und einen im befestigten Zustand mit einer Kontaktfläche (45) des Bauteils (39) zusammenwirkenden, den Befestigungsabschnitt (13) umgebenden Auflageabschnitt (15) aufweist,
**dadurch gekennzeichnet, dass** der Auflageabschnitt (15) eine Innenfläche (17) zur Anlage an der Kontaktfläche (45) des Bauteils (39) und eine die Innenfläche (17) umgebende Außenfläche (19) zur Anlage an einer Dichtung (25) umfasst, wobei die Außenfläche (19) zur Aufnahme der Dichtung (25) gegenüber der, bevorzugt kreisringförmigen, Innenfläche (17) zurückgesetzt ist.

2. Verbindungselement nach Anspruch 1,
**dadurch gekennzeichnet, dass** der axiale Abstand der Außenfläche (19) von der Innenfläche (17) radial nach außen abnimmt.

3. Verbindungselement nach Anspruch 1 oder 2,
**dadurch gekennzeichnet, dass** der Auflageabschnitt (15) eine die Innenfläche (17) und die Außenfläche (19) miteinander verbindende Übergangsfläche (21) aufweist, die im Wesentlichen parallel zur Mittelachse (M) verläuft, wobei insbesondere die Übergangsfläche (21) und die Außenfläche (19) einen Aufnahmeraum (23) für eine ringförmige Dichtung (25) bilden.

4. Verbindungselement nach Anspruch 3,
**dadurch gekennzeichnet, dass** die Übergangsfläche (21) einen in axialer Richtung variierenden Durchmesser aufweist, wobei insbesondere in der Übergangsfläche (21) eine Ringnut ausgebildet ist oder die Übergangsfläche (21) konisch mit in Richtung der Außenfläche (19) abnehmendem Durchmesser verläuft.

5. Verbindungselement nach Anspruch 3 oder 4,
**dadurch gekennzeichnet, dass** das Verhältnis zwischen der radialen Ausdehnung der Außenfläche (19) und der axialen Ausdehnung der Übergangsfläche (21) etwa zwischen 1:1 und 2:1 liegt, insbesondere zwischen 1,4:1 und 1, 7:1.

6. Dichtung (25) für ein Verbindungselement (11) nach einem der vorhergehenden Ansprüche, die ringförmig ausgebildet ist und eine Mittelachse (M') aufweist, wobei die Dichtung (25) eine Oberseite (29) zur Anlage an der Außenfläche (19), eine Innenseite (27), eine Unterseite (33) zur Anlage an der Kontaktfläche (45) des Bauteils (39), und eine Außenseite (31) umfasst, wobei der Durchmesser der Außenseite (31) in axialer Richtung variiert und am Übergang in die Unterseite (33) am größten ist.

7. Dichtung nach Anspruch 6,
**dadurch gekennzeichnet, dass** der Durchmesser der Innenseite (27) in axialer Richtung variiert und am Übergang in die Oberseite (29) am größten ist.

8. Dichtung nach Anspruch 6 oder 7,
**dadurch gekennzeichnet, dass** die Innenseite (27) einen gedachten Freiraum (43) begrenzt, der durch eine gedachte Verlängerung der Oberseite (29) in Richtung der Mittelachse (M') und eine gedachte, vom radial inneren Ende der Unterseite (33) ausgehende und parallel zur Mittelachse (M') verlaufende Ebene definiert ist.

9. Dichtung nach einem der Ansprüche 6 bis 8,
**dadurch gekennzeichnet, dass** das Material der Dichtung (25) zumindest ein Elastomer umfasst, vorzugsweise Silikon oder Fluor-Polymer-Kautschuk, insbesondere VITON.

10. Anordnung (41) aus wenigstens einem Verbindungselement (11) nach einem der Ansprüche 1 bis 5 und wenigstens einer Dichtung (25) nach einem der Ansprüche 6 bis 9, wobei die Dichtung (25) in einer Aufnahme (23) des Verbindungselementes (11) angeordnet ist, wobei die Dichtung (25) insbesondere derart in der Aufnahme (23) angeordnet ist, dass die Oberseite (29) der Dichtung (25) der Außenfläche (19) des Auflageabschnitts (15) des Verbindungselements (11) zugewandt ist.

11. Anordnung nach Anspruch 10,
**dadurch gekennzeichnet, dass** ein Durchmesser der Innenseite (27) der Dichtung (25) kleiner als ein maximaler Durchmesser der Innenfläche (17) des Auflageabschnitts (15) des Verbindungselements (11) ist, insbesondere kleiner als ein maximaler Durchmesser einer die Innenfläche (17) und die Außenfläche (19) des Auflageabschnitts (15) verbindenden Übergangsfläche (21).

12. Anordnung nach Anspruch 10 oder 11,
**dadurch gekennzeichnet, dass** die axiale Höhe der Dichtung (25) zumindest bereichsweise großer ist als das Maß, um das die Außenfläche (19) des Auflageabschnitts (15) gegenüber der Innenfläche (17) des Auflageabschnitts (15) des Verbindungselements (11) zurückgesetzt ist.

13. Anordnung nach einem der Ansprüche 10 bis 12,
**dadurch gekennzeichnet, dass** in einem unverformten Zustand der Dichtung (25) durch die Innenseite (27) der Dichtung (25) sowie durch die Außenfläche (19) und eine die Innenfläche (17) und die Außenfläche (19) miteinander verbindende Übergangsfläche (21) des Verbindungselements (11) ein Hohlraum (43) begrenzt ist.

14. Baugruppe (47) an einer oder für eine Maschine zur Bearbeitung und/oder Verarbeitung von Lebensmittelprodukten,
mit zumindest einer Anordnung (41) nach einem der Ansprüche 10 bis 13 und mit wenigstens einem Bauteil (39), insbesondere einem tafelförmigem Element (51), bevorzugt einem Edelstahlblech, wobei das Verbindungselement (11) an dem Bauteil (39) derart befestigt ist, dass die Dichtung (25) zwischen dem Verbindungselement (11) und der Kontaktfläche (45) des Bauteils (39) zusammengedrückt ist und einen verformten Zustand einnimmt.

15. Baugruppe nach Anspruch 14,
**dadurch gekennzeichnet, dass** die Dichtung (25) gegenüber einem unverformten Zustand zumindest teilweise radial weiter nach außen gedrückt ist, wobei insbesondere der höchste Druck, den die Dichtung (25) auf die Kontaktfläche (45) des Bauteils (39) ausübt, in einem radial äußeren Bereich und bevorzugt am radial äußeren Randbereich der Dichtung (25) gegeben ist.
